# EUROPÄISCHE PATENTSCHRIFT

(11) **EP 0 976 934 B1**
(45) Veröffentlichungstag und Bekanntmachung des Hinweises auf die Patenterteilung: **07.11.2001**
(21) Anmeldenummer: 99810652.0
(22) Anmeldetag: 19.07.1999
(51) Int. Cl.: F16B 13/14

(54) **Ankerstange**
Anchoring bar
Barre d'ancrage

(30) Priorität: 27.07.1998 DE 19833689
(43) Veröffentlichungstag der Anmeldung: 02.02.2000
(73) Patentinhaber: HILTI Aktiengesellschaft, 9494 Schaan (LI)
(72) Erfinder: Obermeier, Josef, 86971 Peiting (DE)
(74) Vertreter: Wildi, Roland

(56) Entgegenhaltungen:
- EP-A- 0 356 425
- EP-A- 0 770 785
- DE-A- 3 831 683
- US-A- 5 060 447

## Beschreibung

Die Erfindung betrifft eine Ankerstange für ein Verbundankersystem gemäss dem Oberbegriff des Patentanspruchs 1.

Neben den klassischen Befestigungstechniken, bei denen Befestigungspunkte mit Hilfe von in einem Bohrloch kraft- und/oder formschlüssig verankerten Spreizdübeln oder Hinterschnittsystemen erstellt werden, sind aus dem Stand der Technik auch chemische Befestigungstechniken bekannt, bei denen eine Ankerstange in eine mit Mörtelmasse gefüllte Aufnahmebohrung eingesetzt wird und nach dem Aushärten der Mörtelmasse fixiert ist. Derartige Verbundankersysteme weisen den Vorteil auf, dass sie weitgehend spreizdruckfrei sind und demnach geringe Achs- und Randabstände erlauben. Für Schwerlastbefestigungen sind Verbundankersysteme bekannt, bei denen ein mehrkomponentiger organischer und/oder anorganischer Verbundmörtel in eine vorbereitete Aufnahmebohrung eingefüllt wird, wobei die Komponenten der Mörtelmasse zunächst noch in Glas- oder Kunststoffgebinden getrennt voneinander vorliegen. Eine Ankerstange, wie sie beispielsweise aus der EP-B-0 356 425 bekannt ist, wird um ihre Längsachse rotierend in die Aufnahmebohrung eingetrieben. Die eingebrachte Ankerstange zerstört die Gebinde, in denen die Komponenten des Verbundmörtels untergebracht sind. Durch die Rotation der Ankerstange wird der Verbundmörtel mehr oder weniger innig durchmischt und die aufgebrochenen Gebinde werden weiter zerkleinert.

Die erzielbaren Lastwerte von Verbundbefestigungen hängen nicht zuletzt von der guten Durchmischung der Komponenten ab. Daher sind in der Vergangenheit eine Vielzahl von Geometrien für die Ankerstange vorgeschlagen worden, die eine gute Durchmischung der Komponenten der Mörtelmasse gewährleisten und die Gebindeteile ausreichend zerkleinern sollen, ohne den Verbundmörtel durch Überhitzung zu inaktivieren. Bei der Lagerung und bei der Handhabung der Mörtelgebinde, insbesondere von in Glaspatronen untergebrachten Mörtelmassen, muss relativ grosse Sorgfalt gewahrt werden, damit die Glaspatronen nicht zerstört werden.

Es sind auch Verbundankersysteme bekannt, bei denen eine Mörtelmasse ausserhalb der Bohrung vorgemischt und erst danach in die vorbereitete Bohrung eingebracht wird. Derartige Verbundankersysteme, die beispielsweise auch von der Anmelderin vertrieben werden, werden überwiegend für Befestigungen in Ziegelmauerwerk, insbesondere in Hohlkammerziegeln, eingesetzt. Die üblicherweise zwei Reaktivkomponenten umfassende Mörtelmasse wird mittels eines Auspressgeräts aus den Einzelgebinden für die Reaktivkomponenten ausgepresst, in einer der Ausbringöffnung des Auspressgeräts vorgelagerten Mischereinrichtung gemischt und in eine im Ziegelmauerwerk vorbereitete Aufnahmebohrung injiziert. Zur besseren Verteilung der bereits vorgemischten Mörtelmasse und um zu verhindern, dass die Mörtelmasse in eine Kammer des mit der Bohrung versehenen Ziegels abfliesst, wird die Aufnahmebohrung zuvor meist mit einer mit Durchbrüchen versehenen Hülse bestückt. Um eine vollständige Verfüllung der mit de Hülse versehenen Aufnahmebohrung zu gewährleisten, muss die Mörtelmasse in einem vorgeschriebenen Vorgang vom Bohrlochtiefsten aus zur Bohrlochmündung injiziert werden. Danach wird eine Ankerstange in die mit dem Injektionsmörtel gefüllte Bohrung eingesetzt. Nach dem Aushärten des Injektionsmörtels ist die Ankerstange in der Aufnahmebohrung fixiert. Neuerdings kommen Injektionsmörtel vermehrt auch für Verankerungen in Vollmaterial, wie beispielsweise Beton, Gestein, und auch in Holz zur Anwendung.

In gerissenem Untergrund, in feuchten oder unzureichend von Bohrmehl gereinigten Bohrungen können Verankerungen von Ankerstangen mit Verbundmörtel oder mit Injektionsmörtel ein verschlechtertes Last-Nerschiebeverhalten aufweisen. Die aus der EP-B-0 356 425 für einen in Glaspatronen angeordneten Verbundmörtel bekannten Beispiele für Ankerstangen weisen im Verankerungsbereich mehrere, hintereinander angeordnete Konen auf. Die Konen erweitern sich jeweils derart zum Vorderende der Ankerstange, dass die Hüllfläche des Verankerungsbereichs einer Zylinderfläche entspricht. Die hintereinander angeordneten Konen sollen beim axialen Verschieben der Ankerstange unter Zuglast zu einem Nachspreizen in der Bohrung führen. Die Konen weisen allerdings den Nachteil auf, dass beim Einsetzen der Ankerstangen in die mit dem Verbundmörtel gefüllte Bohrung in der Mörtelmasse enhaltene Luft nur schwer entweichen kann. Bei in Glaspatronen oder Folienbeuteln angeordneten Verbundmörteln wirkt sich dieser Nachteil nicht allzu gravierend aus, da die Ankerstange nur relativ langsam in die Bohrung eingeführt wird und dabei überdies auch noch rotiert wird, um das Mörtelgebinde zu zerkleinern und die Komponenten des Verbundmörtels zu mischen. Die Konusbereiche sind im allgemeinen ausreichend gut vom Verbundmörtel umschlossen.

Das Einsetzen dieser bekannten Ankerstangen in mit einem Injektionsmörtel gefüllte Bohrungen erfolgt deutlich schneller und ohne Rotation derselben, da kein Gebinde zerstört und zerkleinert werden muss. Aufgrund der Geometrie der bekannten Ankerstangen kann es beim Einsetzen in das Bohrloch vorkommen, dass Luft in den Injektionsmörtel eingebracht wird. Wegen der relativ hohen Viskosität des Injektionsmörtels besteht die Gefahr, dass die in der Mörtelmasse bereits enthaltene und die zusätzlich eingebrachte Luft nicht schnell genug entweicht. Dies kann dazu führen, dass die Konusbereiche der Ankerstange nicht ausreichend verfüllt werden, weil die Lufteinschlüsse dies behindern. Die volle Funktion der Verankerung ist dann nicht mehr gegeben. Diese Nachteile stehen dem Wunsch nach einer Automatisierung des Setzvorgangs entgegen, bei dem die Ankerstangen automatisch in zuvor mittels eines Injektionsautomaten mit einem Injektionsmörtel gefüllte Bohrungen eingesetzt werden.

Aufgabe der vorliegenden Erfindung ist es daher, diesen Nachteilen des Stands der Technik abzuhelfen. Es soll eine Ankerstange geschaffen werden, bei der die Gefahr von Lufteinschlüssen vermindert ist und eine ausreichende Verfüllung des Verankerungsbereichs mit Injektionsmörtel gewährleistet ist. Damit sollen die Voraussetzungen für einen automatisierbaren Setzprozess geschaffen werden. Die Ankerstange soll auch im gerissenen Untergrund, in feuchten und in schlecht gereinigten Bohrungen ein ausreichendes Last-/Verschiebeverhalten aufweisen.

Die Lösung dieser Aufgaben besteht in einer Ankerstange mit den im kennzeichnenden Abschnitt des Patentanspruchs 1 angeführten Merkmalen. Die erfindungsgemässe Ankerstange für ein Verbundankersystem weist einen Schaft auf, der mit einem Anschlussbereich und einem Verankerungsbereich ausgestattet ist. Im Verankerungsbereich sind mehrere, axial hintereinander angeordnete, konusartige Erweiterungen vorgesehen, deren Durchmesser jeweils in Richtung des freien Vorderendes des Verankerungsbereichs zunehmen. Die grössten Aussendurchmesser der hintereinander angeordneten, konusartigen Erweiterungen nehmen in Richtung des freien Vorderendes des Verankerungsbereichs ab.
Durch die erfindungsgemässe Ausbildung des Verankerungsbereichs ist auch bei einem raschen Einschieben der Ankerstange in die mit einem Injektionsmörtel gefüllte Bohrung die Gefahr des Einbringens von Luftblasen deutlich verringert. Bereits in der Mörtelmasse enthaltene Luftblasen werden durch die im vorderen Bereich einen geringeren Aussendurchmesser aufweisende Ankerstange nicht am Aufsteigen gehindert und können nach rückwärts austreten. Dadurch wird ein Lufteinschluss verhindert, und die in die Bohrung eingeschobene Ankerstange wird im Verankerungsbereich vollständig vom Injektionsmörtel umschlossen. Dadurch sind die Voraussetzungen für einen automatisierten Setzvorgang geschaffen, wie er beispielsweise für die Verlegung von Schienenwegen angestrebt wird. Die konusartigen Erweiterungen im Verankerungsbereich ermöglichen bei gerissenem Untergrund, in feuchten oder unzureichend von Bohrmehl gereinigten Bohrungen unter Zuglast ein Nachspreizen der gesetzten Ankerstange und gewährleisten die Einhaltung der Mindestlastwerte.

Für die Funktion der erfindungsgemässen Ankerstange erweist es sich vorteilhaft, wenn der Aussendurchmesser der dem Anschlussbereich am nächsten liegenden rückwärtigen konusartigen Erweiterung zum grössten Aussendurchmesser der dem freien Vorderende am nächsten liegenden vordersten Erweiterung ein Verhältnis aufweist, das etwa 1,2 bis etwa 2 beträgt. Bei diesen Aussendurchmesserverhältnissen wird ein unerwünschter Lufteinschluss im Verankerungsbereich vermieden. Die Ankerstange weist auch im Bereich der vordersten konusartigen Erweiterung noch ein ausreichendes Nachspreizverhalten auf, so dass die Zuglast der Ankerstange auch im gerissenen Untergrund auf ihren gesamten Verankerungsbereich verteilt wird. Die Länge des Verankerungsbereichs der Ankerstange weist zum grössten Aussendurchmesser der rückwärtigen Erweiterung mit Vorteil ein Verhältnis auf, das etwa 4 bis etwa 10 beträgt. Unter den angegebenen geometrischen Bedingungen sind die erzielbaren Lastwerte ausreichend hoch. Die Länge des Verankerungsbereichs ist dabei gerade derart gewählt, dass unerwünschte Lufteinschlüsse weitgehend vermieden werden können.

Zur Verbesserung des Setzverhaltens der Ankerstange und zum besseren Wegleiten von innerhalb des Injektionsmörtels vorhandenen Lufteinschlüssen schliesst mit Vorteil an den durchmessergrössten einer jeden konusartigen Erweiterung ein gegenkonischer Abschnitt an. Für die Funktion der Ankerstange erweist es sich dabei als zweckmässig, wenn der Verankerungsbereich am Übergang von der vordersten Erweiterung zum vorhergehenden, gegenkonischen Abschnitt einen Mindestaussendurchmesser aufweist, der zum Nennanschlussdurchmesser im Anschlussbereich ein Verhältnis aufweist, das etwa 0,25 bis etwa 0,6 beträgt.

Vorzugsweise ist die Ankerstange im Verankerungsbereich derart ausgebildet, dass die grössten Aussendurchmesser der hintereinander angeordneten, konusartigen Erweiterungen auf einer einhüllenden Kegelmantelfläche angeordnet sind. Die grössten Aussendurchmesser der Erweiterungen nehmen von Erweiterung zu Erweiterung stetig ab. Diese Massnahme erweist sich von Vorteil für die erzielbare Setzgeschwindigkeit, ohne durch die höhrere Setzgeschwindigkeit Gefahr zu laufen, beim Einbringen der Ankerstange Luftblasen in die mit Injektionsmörtel gefüllte Bohrung einzubringen oder im Bereich der Erweiterungen einzuschliessen.

Weitere Vorteile der Erfindung ergeben sich aus der Beschreibung eines Ausführungsbeispiels der Ankerstange mit Bezug auf die einzige schematische Darstellung, die eine in eine mit einem Injektionsmörtel gefüllte Bohrung eingesetzte Ankerstange zeigt. Die gesamthaft mit dem Bezugszeichen 1 versehene Ankerstange besitzt einen Anschlussbereich 2 und einen Verankerungsbereich 3. Im Anschlussbereich 2 ist die Ankerstange 1 mit einem Anschlussgewinde 4 als Lastangriffsmittel versehen. Der Verankerungsbereich 3 weist eine Anzahl von konusartigen Erweiterungen auf, die im wesentlichen rotationssymmetrisch zur Achse A der Ankerstange 1 ausgebildet sind. In der Darstellung trägt die dem Anschlussbereich 2 nächste rückwärtige Erweiterung das Bezugszeichen 5. Eine vorderste konusartige Erweiterung am freien Vorderende des Verankerungsbereichs 3 ist mit dem Bezugszeichen 6 versehen. Die Ankerstange 1 ist in eine Bohrung B in einem Untergrund G, beispielsweise in Beton, eingesetzt, die mit einem Injektionsmörtel C gefüllt ist.

Die konusartigen Erweiterungen 5, 6 sind jeweils in Richtung des freien Vorderendes des Verankerungsbereichs 2 erweitert ausgebildet. In der Darstellung ist der grösste Aussendurchmesser der rückwärtigen Erweiterung 5 mit h bezeichnet. Der grösste Aussendurchmesser der vordersten Erweiterung 6 trägt das Bezugszeichen v. Die konusartigen Erweiterungen sind derart ausgebildet, dass ihre grössten Aussendurchmesser in Richtung des freien Vorderendes des Verankerungsbereichs 3 kleiner werden. Vorzugsweise sind dabei die grössten Aussendurchmesser der axial hintereinander angeordneten, konusartigen Erweiterungen derart gewählt, dass sie auf einer den Verankerungsbereich 3 einhüllenden Kegelmantelfläche liegen, die in der Darstellung durch die Gerade k angedeutet ist. An den durchmessergrössten Bereich jeder konusartigen Erweiterungen schliesst jeweils ein gegenkonischer Abschnitt an. Der Gegenkonus der rückwärtigen Erweiterung 5 ist mit 7 bezeichnet. Der Gegenkonus der vordersten Erweiterung 6 trägt das Bezugszeichen 9. Am Übergang von der vordersten Erweiterung 6 zum Gegenkonus 8 der vorhergehenden konischen Erweiterung 10 weist der Verankerungsbereich 3 der Ankerstange 1 einen Mindestaussendurchmesser m auf.

Das Verhältnis des grössten Aussendurchmessers h der rückwärtigen konusartigen Erweiterung 5 zum grössten Aussendurchmesser v der vordersten konusartigen Erweiterung 6 beträgt etwa 1,2 bis etwa 2. Dabei weist der Verankerungsbereich 3 eine axiale Länge I auf, die zum grössten Aussendurchmesser h der rückwärtigen Erweiterung 5 im Verhältnis von etwa 4 bis etwa 10 steht. Der Mindestaussendurchmesser m im Verankerungsbereich 3 steht zum Nennanschlussdurchmesser im Anschlussbereich 2 in einem Verhältnis von etwa 0,25 bis etwa 0,6.

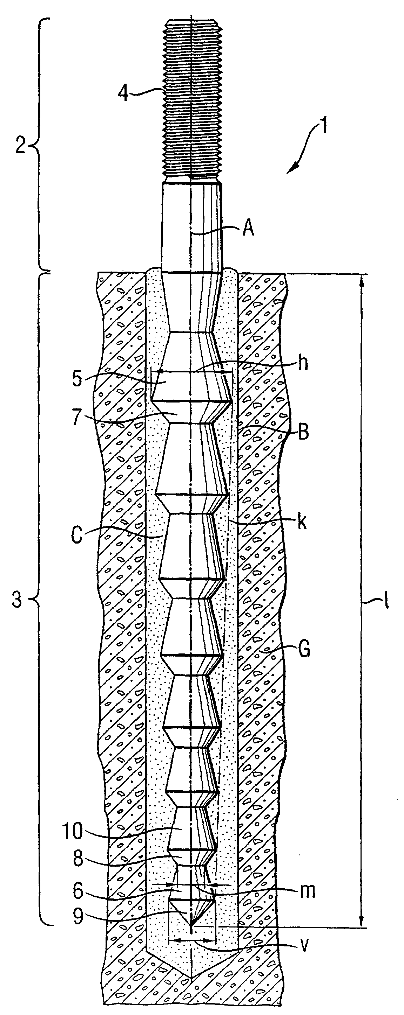

## Patentansprüche

1. Ankerstange für ein Verbundankersystem mit einem Schaft, der einen Anschlussbereich (2) und einen Verankerungsbereich (3) mit mehreren axial hintereinander angeordneten, konusartigen Erweiterungen (5, 6, 10) besitzt, deren Durchmesser jeweils in Richtung des freien Vorderendes des Verankerungsbereichs (3) zunimmt, **dadurch gekennzeichnet, dass** die grössten Aussendurchmesser (h, v) der hintereinander angeordneten, konusartigen Erweiterungen in Richtung des freien Vorderendes kleiner werden.

2. Ankerstange gemäss Anspruch 1, **dadurch gekennzeichnet, dass** der grösste Aussendurchmesser (h) der dem Anschlussbereich (2) am nächsten liegenden rückwärtigen konusartigen Erweiterung (5) zum grössten Aussendurchmesser (v) der dem freien Vorderende am nächsten liegenden vordersten Erweiterung (6) ein Verhältnis aufweist, das etwa 1,2 bis etwa 2 beträgt.

3. Ankerstange gemäss Anspruch 2, **dadurch gekennzeichnet, dass** der Verankerungsbereich (3) eine Länge (I) aufweist, die zum grössten Aussendurchmesser (h) der rückwärtigen Erweiterung (5) ein Verhältnis aufweist, das etwa 4 bis etwa 10 beträgt.

4. Ankerstange gemäss einem der vorangehenden Ansprüche, **dadurch gekennzeichnet, dass** jede konusartige Erweiterung (5, 6, 10) einen gegenkonischen Abschnitt (7, 8, 9) aufweist, der an den durchmessergrössten Bereich der Erweiterung anschliesst.

5. Ankerstange gemäss Anspruch 4, **dadurch gekennzeichnet, dass** der Verankerungsbereich (3) am Übergang von der vordersten Erweiterung (6) zum vorhergehenden, gegenkonischen Abschnitt (8) einen Mindestaussendurchmesser (m) aufweist, der zum Nennanschlussdurchmesser im Anschlussbereich (2) ein Verhältnis aufweist, das etwa 0,25 bis etwa 0,6 beträgt.

6. Ankerstange gemäss einem der vorangehenden Ansprüche, **dadurch gekennzeichnet, dass** die grössten Aussendurchmesser (h, v) der hintereinander angeordneten, konusförmigen Erweiterungen (5, 6) auf einer den Verankerungsbereich (3) einhüllenden Kegelmantelfläche (k) angeordnet sind.

## Claims

1. Anchoring bar for a shear connector system with a shaft having a connecting region (2) and an anchoring region (3) with a plurality of axially arranged cone-shaped enlargements (5, 6, 10) one after the other, their diameters increasing in the direction of the free front end of the anchoring region (3), **characterised in that** the largest external diameter (h, v) of the sequentially arranged, cone-shaped enlargements becomes smaller in the direction of the free front end.

2. Anchoring bar according to Claim 1, **characterised in that** the largest outer diameter (h) of the rear-most cone-shaped enlargement (5) lying nearest to the connecting region (2) has a ratio to the largest external diameter (v) of the front-most enlargement (6) nearest to the free front end of between about 1.2 and about 2.

3. Anchoring bar according to Claim 2, **characterised in that** the anchoring region (3) has a length (1) having a ratio to the largest outer diameter (h) of the rear-most enlargement (5) of between about 4 and about 10.

4. Anchoring bar according to one of the previous claims, **characterised in that** every cone-shaped enlargement (5, 6, 10) has a counter-conical section (7, 8, 9) which borders on the largest diameter region of the enlargement.

5. Anchoring bar according to Claim 4, **characterised in that** the anchoring region (3) at the transition from the front-most enlargement (6) to the previous counter-conical section (8) has a minimum outer diameter (m) having a ratio to the nominal connecting diameter in the connecting region (2) of between about 0.25 and about 0.6.

6. Anchoring bar according to one of the previous claims, **characterised in that** the largest outer diameters (h, v) of the cone-shaped enlargements (5, 6) arranged behind one another are arranged on a conical surface shell (k) enveloping the anchoring region (3).

## Revendications

1. Tige d'ancrage pour un système d'ancrage composite, comportant une tige qui possède une zone de jonction (2) et une zone d'ancrage (3) avec plusieurs élargissements (5, 6, 10) de type cône, disposés axialement l'un derrière l'autre, dont le diamètre augmente chaque fois en direction de l'extrémité libre avant de la zone d'ancrage (3), **caractérisée en ce que** les plus grands diamètres extérieurs (h, v) des élargissements de type cône, disposés l'un derrière l'autre, diminuent en direction de l'extrémité libre avant.

2. Tige d'ancrage selon la revendication 1, **caractérisée en ce que** le plus grand diamètre extérieur (h) de l'élargissement arrière (5), de type cône, situé le plus près de la zone de jonction (2), présente, par rapport au plus grand diamètre extérieur (v) de l'élargissement avant (6), situé le plus près de l'extrémité libre avant, un rapport qui est d'environ 1,2 à environ 2.

3. Tige d'ancrage selon la revendication 2, **caractérisée en ce que** la zone d'ancrage (3) présente une longueur (1) qui présente, par rapport au plus grand diamètre extérieur (h) de l'élargissement arrière (5), un rapport qui est d'environ 4 à environ 10.

4. Tige d'ancrage selon l'une des revendications précédentes, **caractérisée en ce que** chaque élargissement (5, 6, 10) de type cône comporte une portion (7, 8, 9) conique inversée qui fait suite à la zone de l'élargissement de plus grand diamètre.

5. Tige d'ancrage selon la revendication 4, **caractérisée en ce que** la zone d'ancrage (3) présente, au droit de la transition entre l'élargissement avant (6) et la portion (8) conique inversée précédente, un diamètre extérieur minimal (m) qui présente, par rapport au diamètre nominal de jonction dans la zone de jonction (12), un rapport qui est d'environ 0,25 à 0,6.

6. Tige d'ancrage selon l'une des revendications précédentes, **caractérisée en ce que** les plus grands diamètres extérieurs (h, v) des élargissements (5, 6) en forme de cône, disposés l'un derrière l'autre, sont disposés sur une surface d'enveloppe de cône (k) qui enveloppe la zone d'ancrage (3).
